# EUROPÄISCHE PATENTSCHRIFT

(11) **EP 1 451 977 B1**
(45) Veröffentlichungstag und Bekanntmachung des Hinweises auf die Patenterteilung: **03.05.2006**
(21) Anmeldenummer: 02779155.7
(22) Anmeldetag: 11.10.2002
(51) Int. Cl.: H04L 12/403, H04L 1/00, B60R 16/02

(54) **VERFAHREN ZUR DATENÜBERTRAGUNG ZWISCHEN EINER ZENTRALEINHEIT UND EINER MEHRZAHL VON MODULEN MITTELS EINES DATENPROTOKOLLRAHMENS**
METHOD FOR THE TRANSMISSION OF DATA BETWEEN A CENTRAL UNIT AND A PLURALITY OF MODULES BY MEANS OF A DATA PROTOCOL FRAME
PROCEDE DE TRANSMISSION DE DONNEES ENTRE UNE UNITE CENTRALE ET PLUSIEURS MODULES A L'AIDE D'UNE TRAME DE PROTOCOLE DE DONNEES

(30) Priorität: 20.10.2001 DE 10151927
(43) Veröffentlichungstag der Anmeldung: 01.09.2004
(73) Patentinhaber: Conti Temic microelectronic GmbH, 90411 Nürnberg (DE); Siemens AG, 80333 München (DE); ROBERT BOSCH GMBH, 70442 Stuttgart (DE)
(72) Erfinder: WULFF, Holger, 85051 Ingolstadt (DE); PFAFFENEDER, Bernd, 93138 Lappersdorf (DE); MEIER, Klaus-Dieter, 71229 Leonberg (DE); MAURITZ, Ewald, 71287 Weissach (DE); BÜHRING, Heiko, 26125 Oldenburg (DE); BOGENRIEDER, Hans-Georg, 85077 Manching (DE)
(86) Internationale Anmeldenummer: PCT/DE2002/003837
(87) Internationale Veröffentlichungsnummer: WO 2003/036878

(56) Entgegenhaltungen:
- WO-A-97/42733

## Beschreibung

Die Erfindung betrifft ein Verfahren zur Datenübertragung zwischen einer Zentraleinheit und einer Mehrzahl von Modulen mittels eines Datenprotokollrahmens.

Es ist grundsätzlich bekannt, die Datenübertragung zwischen einer Zentraleinheit und einer Mehrzahl von Modulen mittels Prüfinformationen zu überwachen. Es wurde jedoch festgestellt, dass für die Datenübertragung wichtige Informationen, wie beispielsweise die Positionsinformation, also die Adresse einschließlich der Zuweisung der Position im Protokollrahmen, zwar fehlerfrei zu den Modulen übertragen wurden, jedoch im nachfolgenden Normalbetrieb, insbesondere bei mehrmaligem Wegfall der Betriebsspannung die dort in einem Speicher abgelegten Daten nicht immer erhalten blieben. Gerade bei der Positionsinformation führte dies nachfolgend zur Störung der gesamten Datenübertragung, da Module die Positionsinformation nicht mehr oder insbesondere nur fehlerhaft auswerteten und damit anstelle der zugewiesenen Position an einer anderen Position sendeten. Gerade in Bussystemen in Fahrzeugen mit sicherheitskritischen Anwendungen, bsp. Insassenschutzsystemen mit Sensoren und/oder Insassenschutzmitteln am Bussystem, könnte es so zu verheerenden Fehlinterpretationen durch die Zentraleinheit oder die anderen Module kommen.

Aufgabe der Erfindung ist es daher, ein sichereres Verfahren zur Datenübertragung anzugeben. Diese Aufgabe ist durch die kennzeichnenden Merkmale des Anspruchs 1 gelöst. Vorteilhafte Weiterbildungen sind den Unteransprüchen zu entnehmen.

Grundgedanke ist dabei, die zur Sicherung der Datenübertragung bei der Zuweisung der Positionsinformation vorhandene Prüfinformation in den Modulen zusammen mit der Positionsinformation abzuspeichern, vorzugsweise nichtflüchtig, und zumindest einmal vor dem Beginn einer Übertragung von Daten von den Modulen an die Zentraleinheit die Positionsinformation anhand der Prüfinformation zu überprüfen und gegebenenfalls eine Übertragung zu unterdrücken.

Dies kann auf ein Power-On-Signal oder vorzugsweise vor Beginn der Übertragung in jedem Datenprotokollrahmen erfolgen.

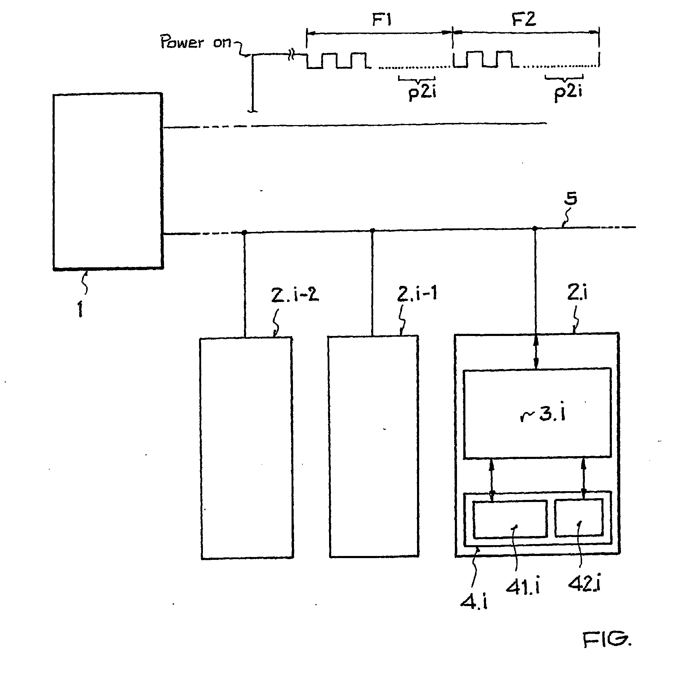

Die Erfindung soll nachfolgend anhand von Ausführungsbeispielen und einer Figur näher erläutert werden. Kurze Beschreibung der Figur:
- Figur: Insassenschutzsystem mit einer Zentraleinheit und einer Mehrzahl von Modulen, an denen Sensoren und/oder Insassenschutzeinrichtungen angeschlossen sind

Die Figur zeigt am Beispiel eines Insassenschutzsystems eines Kraftfahrzeugs ein Datenübertragungssystem bestehend aus einer Zentraleinheit 1 und einer Mehrzahl (1,2 ... i ... n) von Modulen 2, wobei beispielhaft das "i"-te Modul 2.i näher dargestellt wurde. Die Module 2 sind über ein Bussystem 5 bestehend aus einer oder mehreren Busleitungen in beliebiger Struktur (bspw. Ring, Strang- oder Daisy-Chain) mit der Zentraleinheit 1 zur bidirektionalen Datenübertragung und gegebenenfalls auch zur Energieübertragung von der Zentraleinheit 1 an die Module 2 verbunden. Die Datenübertragung erfolgt in Form von eines Datenprotokollrahmens F, bspw. im Pollingbetrieb mit einer zentralen Anfrage an alle Module. Im Datenprotokollrahmen F ist jedem Modul 2.i von der Zentraleinheit 1 der jeweils eine Position p2.i und damit einen Abschnitt des Datenprotokollrahmens F mittels einer Positionsinformation 41.i zugewiesen. Die Zuweisung erfolgt in einer lnitialisierungsphase vor Beginn des Normalbetriebs, beispielsweise noch während der Fertigung des Fahrzeugs beim Hersteller, wobei die Positionsinformation 41.i vom Modul 2.i, also beispielsweise dessen Adresse und damit korrespondierend dessen Position im Datenprotokollrahmen, in einem nichtflüchtigen Speicher 4.i gespeichert wird. Im nachfolgenden Normalbetrieb sendet das Modul 2.i jeweils seine Daten an dieser zugewiesenen Position p2.i im Datenprotokollrahmen F.

Zur Überprüfung der den Modulen 2.i zugewiesenen Positionsinformationen 41.i übermittelt die Zentraleinheit 1 den Modulen 2.i in der Initialisierungsphase zusätzlich eine Prüfinformation 42.i, anhand der die gespeicherte Positionsinformation 41.i sowohl bei der Übertragung als auch in erfindungswesentlicher Weise nachfolgend im Normalbetrieb überprüft wird. Diese Prüfinformation 42.i wird im Speicher 4 ebenfalls nichtflüchtig gespeichert. Als Prüfinformation kommt neben einer Kopie oder/und Inverskopie auch eine Quersumme, ein Parity-Flag oder vergleichbare Kodierungsformen in Frage.

Das Modul 2.i überprüft auch im der Initialisierungsphase nachfolgenden Normalbetrieb zumindest noch einmal vor der Übertragung von Daten die abgespeicherte Positionsinformation 41.i anhand der Prüfinformation 42.i auf Korrektheit und unterdrückt bei einer Abweichung die Übertragung seiner Daten auf das Bussystem 5.

Dies kann zumindest bei jeder Inbetriebnahme nach einem Power-On-Signal oder besonders bevorzugt für jeden Datenprotokollrahmen F1,F2,... vor Beginn der Übertragung von Daten erfolgen. In letzterem Fall würde also mit jedem Durchlauf des Datenprotokollrahmens erneut die abgespeicherte Positionsinformation 41 anhand der Prüfinformation 42 auf Korrektheit überprüft und so sichergestellt, dass alle Module 2 an denen ihnen zugewiesenen Positionen p2.i senden.

Diese Überprüfung auf Korrektheit beziehungsweise Abweichung der abgespeicherten Positionsinformation 41 kann einer Diagnoseanfrage der Zentraleinheit 1 oder eines Diagnosegerätes hin überwacht und gegebenenfalls auch später ausgelesen werden.

## Patentansprüche

1. Verfahren zur Datenübertragung zwischen einer Zentraleinheit (1) und einer Mehrzahl von über ein Bussystem (5) mit der Zentraleinheit (1) verbundenen Modulen (2.1,2.2,...,2.i,...,2.n) mittels eines Datenprotokollrahmens (F),
a) wobei in einer Initialisierungsphase die Zentraleinheit (1) jedem Modul (2.i) mittels einer Positionsinformation (41.i) eine Position (p2.i) innerhalb des Datenprotokollrahmens (F) zuweist und die Positionsinformation (41.i) vom Modul (2.i) gespeichert wird,
b) zur Überprüfung der den Modulen (2.i) zugewiesenen Positionsinformationen (41.i) die Zentraleinheit (1) den Modulen (2.i) in der Initialisierungsphase zusätzlich eine Prüfinformation (42.i) übermittelt, anhand der die gespeicherte Positionsinformation (41.i) überprüft wird,
c) im nachfolgenden Normalbetrieb das Modul (2.i) Daten jeweils an dieser zugewiesenen Position (p2.i) im Datenprotokollrahmen (F) sendet,
d) wobei die Module im der Initialisierungsphase nachfolgenden Normalbetrieb zumindest noch einmal vor der Übertragung von Daten die abgespeicherte Positionsinformation (41.i) anhand der Prüfinformation (42.i) auf Korrektheit überprüfen und bei einer Abweichung die Übertragung unterdrücken.

2. Verfahren nach Anspruch 1, **dadurch gekennzeichnet, daß** die Module (2) bei jeder inbetriebnahme nach einem Power-On-Signal die abgespeicherte Positionsinformation (41) anhand der Prüfinformation (42) auf Korrektheit überprüfen.

3. Verfahren nach Anspruch 1, **dadurch gekennzeichnet, daß** die Module (2) für jeden Datenprotokollrahmen (F1,F2,...) vor Beginn der Übertragung von Daten die abgespeicherte Positionsinformation (41) anhand der Prüfinformation (42) auf Korrektheit überprüfen.

4. Verfahren nach einem der vorangehenden Ansprüche, **dadurch gekennzeichnet, daß** die Module (2) auf eine Diagnoseanfrage der Zentraleinheit (1) oder eines Diagnosegerätes hin die Korrektheit beziehungsweise Abweichung der abgespeicherten Positionsinformation (41) mitteilen.

5. Verwendung eines Verfahrens nach einem der vorangehenden Ansprüche für die Datenübertragung in einem Insassenschutzsystem zwischen einer Zentraleinheit und einer Mehrzahl von Modulen, an denen Sensoren und/oder Insassenschutzeinrichtungen angeschlossen sind.

## Claims

1. A procedure for transmitting data between a central unit (1) and a plurality of modules (2.1, 2.2,... 2.i,.... 2.n) which are connected via a bus system (5) with the central unit (1) using a data protocol frame (F),
a) whereby in an initialisation phase, the central unit (1) assigned to each module (2.i) using a position information (41.i) a position (p2.i) within the data protocol frame (F), and the position information (41.i) is stored by the module (2.i),
b) to monitor the position information (41.i) which is assigned to the modules (2.i), the central unit (1) also transmits test information (42.i) to the modules (2.i) in the initialisation phase, based on the stored position information (41.i),
c) in the subsequent normal operation, the module (2.i) sends data in each case to the assigned position (p2.i) in the data protocol frame (F),
d) whereby the modules, in the normal operation which follows the initialisation phase, again check the stored position information (41-.i) for correctness prior to transmitting the data, based on the test information (42.i), and suppress the transmission if any deviation occurs.

2. A procedure according to claim 1, **characterised in that** each time the system is put into operation following a Power-On signal, the modules (2) check the stored position information (41) for correctness, based on the test information (42).

3. A procedure according to claim 1, **characterised in that** for each data protocol frame, (F1, F2... ), the modules (2) check the stored position information (41) for correctness, based on the test information (42).

4. A procedure according to any one of the above claims, **characterised in that** the modules (2) report the correctness or deviation of the stored position information (41) when a diagnosis query is sent from the central unit (1) or a diagnosis device.

5. The use of a procedure according to any one of the above claims for data transmission in a passenger protection system, between a central unit and a plurality of modules, to which sensors and/or passenger protection devices are connected.

## Revendications

1. Procédé de transmission de données, au moyen d'un cadre de protocole de données (F), entre une unité centrale (1) et une pluralité de modules (2.1, 2.2, ..., 2.i, ..., 2.n) raccordés via un système de bus (5) à l'unité centrale (1),
a) l'unité centrale (1), dans une phase d'initialisation, affectant à chaque module (2.i), au moyen d'une information de position (41.i), une position (p2.i) à l'intérieur du cadre de protocole de données (F), et l'information de position (41.i) du module étant enregistrée,
b) pour la vérification des informations de position (41.i) affectées aux modules (2.i), l'unité centrale (1) transmettant en plus aux modules (2.i), dans la phase d'initialisation, une information de contrôle (42.i) à l'aide de laquelle l'information de position (41.i) enregistrée est contrôlée,
c) le module (2.1) envoyant, dans le mode normal qui suit, des données respectivement dans cette position affectée (p2.i) dans le cadre de protocole de données (F),
d) les modules, dans le mode normal qui suit la phase d'initialisation, contrôlant, au moins encore une fois, avant la transmission de données, le caractère correct de l'information de position (41.i) enregistrée, à l'aide de l'information de contrôle (42.i) et, en cas de divergence, interdisant la transmission.

2. Procédé selon la revendication 1, **caractérisé en ce que** les modules (2), lors de chaque mise en service à la suite d'un signal Power-On, contrôlent le caractère correct de l'information de position (41) à l'aide de l'information de contrôle (42).

3. Procédé selon la revendication 1, **caractérisé en ce que** les modules (2), pour chaque cadre de protocole de données (F1, F2,...), contrôlent, avant la transmission de données, le caractère correct de l'information de position (41) enregistrée, à l'aide de l'information de contrôle (42).

4. Procédé selon une des revendications précédentes, **caractérisé en ce que** les modules (2), sur une demande de diagnostic de l'unité centrale (1) ou d'un appareil de diagnostic, communiquent le caractère correct ou la divergence de l'information de position (41) enregistrée.

5. Utilisation d'un procédé selon une des revendications précédentes pour la transmission de données dans un système de protection d'occupants entre une unité centrale et une pluralité de modules auxquels des capteurs et/ou des équipements de protection d'occupants sont raccordés.
